# EUROPEAN PATENT APPLICATION

(11) **EP 4 009 129 A1**
(43) Date of publication of application: **08.06.2022**
(21) Application number: 20851682.3
(22) Date of filing: 24.06.2020
(51) Int. Cl.: G05D 1/02, B25J 19/06

(54) **ROBOT CONTROL DEVICE, METHOD, AND PROGRAM**

(30) Priority: 14.08.2019 JP 2019148940
(71) Applicant: Sony Group Corporation, Tokyo 108-0075 (JP)
(72) Inventor: SUZUKI, Ryuichi, Tokyo 108-0075 (JP); SUZUKI, Hirotaka, Tokyo 108-0075 (JP); YANG, Seungha, Tokyo 108-0075 (JP); HONGO, Kazuo, Tokyo 108-0075 (JP); YUGUCHI, Yudai, Tokyo 108-0075 (JP)
(74) Representative: D Young & Co LLP
(86) International application number: PCT/JP2020/024824
(87) International publication number: WO 2021/029147

(57) **Abstract**

A robot control device (10) includes an attribute determination unit (71) that determines an attribute of an object person (T) around a robot (1); and a decision unit (74) that decides a notification action of notifying, by the robot (1), the object person (T) of presence of the robot (1), on the basis of the attribute determined by the attribute determination unit (71) and a risk of harm that may be caused to the object person (T) by the robot (1).

## Description

### Field

The present disclosure relates to a robot control device, a method, and a program.

### Background

There is a technology to notify surrounding object persons of potential harm that may be caused to the surrounding object persons by a robot, through a display of the robot. Such a robot corrects, to avoid harm, an operation pattern and changes a display mode of a display of the robot depending on an amount of the correction.

### Citation List

### Patent Literature

Patent Literature 1: JP 2007-196298 A

### Summary

### Technical Problem

However, in the related art, there has been room for improvement for an appropriate notification from the robot to the object persons. For example, identical notification content may be notification content that is excessive for an object person or may be notification content that is insufficient for another object person, due to different perceptions between the object persons.

The present application has been made in view of the above, and an object of the present application is to provide a robot control device, a method, and a program that are configured to provide an appropriate notification. Solution to Problem

A robot control device comprising: an attribute determination unit that determines an attribute of an object person around a robot; and a decision unit that decides a notification action of notifying, by the robot, the object person of presence of the robot, based on the attribute determined by the attribute determination unit and a risk of harm that may be caused to the object person by the robot.

According to one aspect of an embodiment, appropriate notification can be provided. It should be noted that the effects described here are not necessarily limited, and any of effects described in the present disclosure may be provided.

### Brief Description of Drawings

FIG. 1 is a diagram illustrating an overview of a robot control device according to an embodiment.
FIG. 2 is a block diagram illustrating a configuration example of the robot control device according to the embodiment.
FIG. 3 is a table illustrating an example of object person information according to the embodiment.
FIG. 4 is a diagram illustrating an example of a physical characteristics table according to the embodiment.
FIG. 5 is a diagram illustrating an example of an easiness level table according to the embodiment.
FIG. 6 is a diagram illustrating an example of a comprehension level table according to the embodiment.
FIG. 7 is a diagram illustrating an example of a risk table according to the embodiment.
FIG. 8 is a diagram illustrating an example of an intervention level table according to the embodiment.
FIG. 9 is a flowchart illustrating a processing procedure performed by the robot control device according to the embodiment.
FIG. 10 is a hardware configuration diagram illustrating an example of a computer implementing the function of the robot control device.

### Description of Embodiments

The embodiments of the present disclosure will be described in detail below with reference to the drawings. Note that in the following embodiments, the same portions are denoted by the same reference numerals or symbols, and a repetitive description thereof will be omitted.

### [Embodiments]

### [Configuration of system according to embodiment]

First, an overview of an embodiment of the present disclosure will be described. As described above, there is the technology to notify surrounding object persons of potential harm that may be caused to the surrounding object persons by a robot, through a display of the robot. However, in such a technology, there has been room for improvement in optimizing notification contents to the object persons. For example, even if an identical notification content is provided, the object persons may perceive the content differently.

Specifically, for example, while an object person who makes contact with the robot every day knows an action pattern of the robot well, an object person who makes contact with the robot for the first time does not know the action pattern of the robot. For this reason, for example, when the identical notification content is provided to both object persons, the identical notification content may be an excessive notification content or may be an insufficient notification content.

The present technical idea has been conceived in view of the above points, and the notification contents can be set for the respective object persons, providing appropriate notification. Furthermore, in the present technical idea, notification is provided in consideration of a risk (hereinafter, referred to as risk of harm) of harm that may be caused to the object persons by the robot.

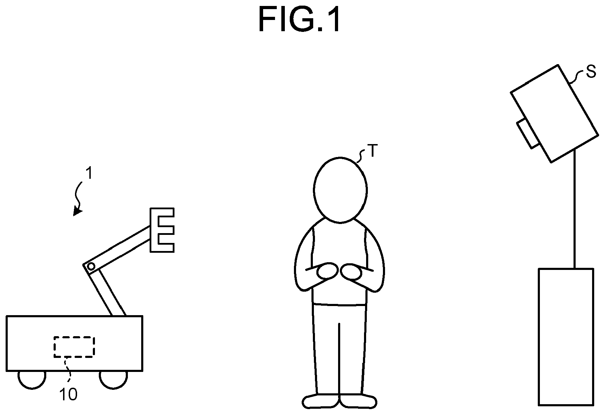

First, an overview of a robot control device according to the present embodiment will be described with reference to FIG. 1. FIG. 1 is a diagram illustrating the overview of the robot control device according to the present embodiment. As illustrated in FIG. 1, a robot control device 10 is a control device that is built in a robot 1 to control the robot 1.

For example, the robot 1 is a mobile robot, and in the example illustrated in FIG. 1, the robot 1 is a wheeled robot. Here, the robot may be a legged robot or a flying mobile body. In addition, the robot may include at least one or more arms or may be a mobile body with no arm.

For example, the robot control device 10 detects the object person T around the robot 1 on the basis of a sensing result from a sensor S that senses the periphery of the robot 1, and decides a notification action of the robot 1 for the object person T, on the basis of an attribute of the object person T and the risk of harm that may be caused to the object person T by the robot 1.

Note that the example illustrated in FIG. 1 illustrates the sensor S that is provided separately from the robot 1, but the sensor S may be provided inside the robot 1, or a wearable device that is worn by the object person T may be used as the sensor S.

For example, the robot control device 10 determines whether or not the object person T is a user who normally makes contact with the robot 1, as the attribute of the object person T, and decides the risk of harm on the basis of a current state of the robot 1, a distance between the object person T and the robot 1, and the like.

Then, the robot control device 10 calculates an intervention level at which the robot 1 should intervene in the object person T, on the basis of the above attribute and the risk of harm. Here, the intervention level represents a degree at which the object person T should be notified of the presence of the robot 1.

The robot control device 10 decides the notification action that the object person T easily notices, as the intervention level is higher, and decides a minimum notification action as the intervention level is lower.

As described above, the robot control device 10 according to the embodiment decides the notification action according to the intervention level, and thus, the notification action can be appropriately decided according to the attribute of the object person T and the risk of harm.

### [Configuration of robot control device according to embodiment]

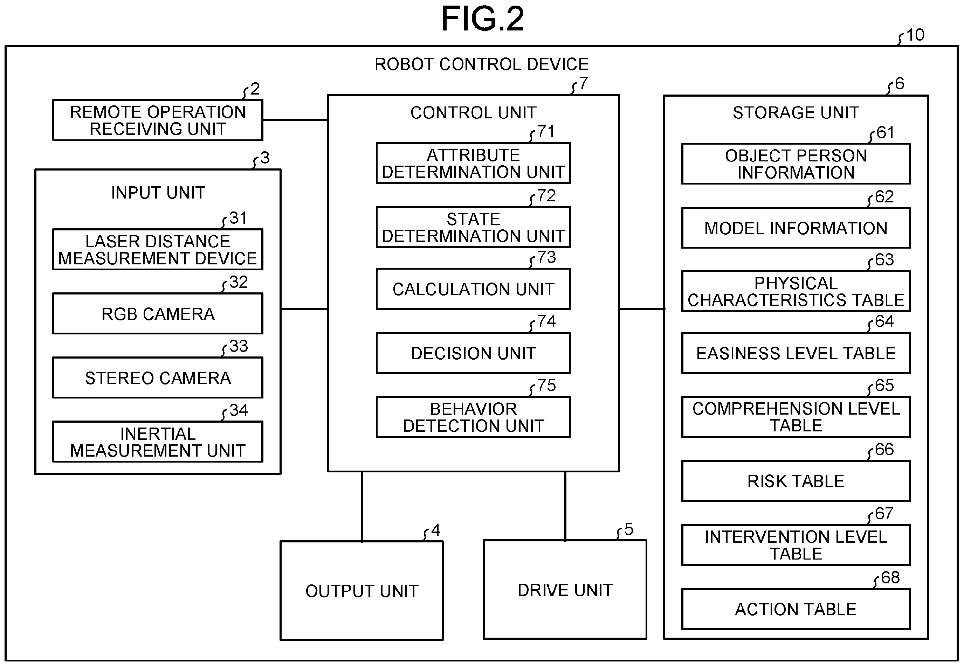

Next, a configuration example of the robot control device 10 according to the embodiment will be described with reference to FIG. 2. FIG. 2 is a block diagram illustrating the configuration example of the robot control device 10 according to the embodiment.

As illustrated in FIG. 2, the robot control device 10 includes a remote operation receiving unit 2, an input unit 3, an output unit 4, a drive unit 5, a storage unit 6, and a control unit 7. The remote operation receiving unit 2 is a communication unit that receives a remote operation for the robot 1.

The input unit 3 inputs a sensing result of environment sensing around the robot 1 to the control unit 7. In the example illustrated in FIG. 2, the input unit 3 includes a laser distance measurement device 31, an RGB camera 32, a stereo camera 33, and an inertial measurement unit 34.

The laser distance measurement device 31 is a device that measures a distance to an obstacle, and includes an infrared ranging device, an ultrasonic ranging device, a laser imaging detection and ranging (LiDAR), or the like.

The RGB camera 32 is an imaging device that captures an image (a still image or a moving image). The stereo camera 33 is an imaging device that images an object from a plurality of directions to measures a distance to the object person. The inertial measurement unit 34 is, for example, a device that detects angles of three axes and acceleration.

For example, the output unit 4 is provided in the robot 1, and includes a display device or a speaker. The output unit 4 outputs an image or voice input from the control unit 7. The drive unit 5 includes an actuator, and drives the robot 1 on the basis of the control by the control unit 7.

The storage unit 6 stores object person information 61, model information 62, a physical characteristics table 63, an easiness level table 64, a comprehension level table 65, a risk table 66, an intervention level table 67, and an action table 68.

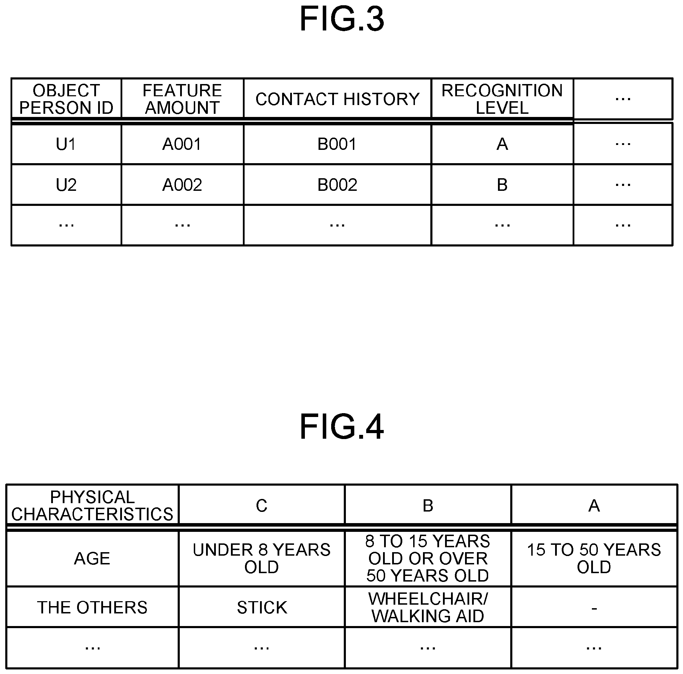

The object person information 61 is information about the object person T. In the present embodiment, the object person information 61 is information about the number of times of making contact with the robot 1 by the object person T and the frequency of the contact. FIG. 3 is a table illustrating an example of the object person information 61 according to the embodiment.

As illustrated in FIG. 3, the object person information 61 is information in which "object person ID", "feature amount", "contact history", "recognition level", and the like are associated with each other. The "object person ID" is an identifier for identification of the object person T. The "feature amount" represents a feature amount of the corresponding object person T. For example, the feature amount is information about a feature amount of a face of the object person T.

The "contact history" is information about a history of contact of the corresponding object person T with the robot 1. In other words, the contact history here is a history of recognition of the object person T by the robot 1. For example, in the contact history, information about date and time, frequency, and the like of the recognition of the object person T by the robot 1 is recorded.

The "recognition level" represents a degree of recognition of the robot 1 by the corresponding object person T. In the present embodiment, the recognition level is set according to the number of times of making contact with the robot 1 or the frequency of the contact, on the basis of the contact history.

In the present embodiment, the recognition level is represented in three levels, and "A" indicates the highest recognition level and "C" indicates the lowest recognition level. For example, the recognition level "A" indicates constant contact with the robot 1, and the object person T indicated by the recognition level "C" makes contact with the robot for the first time. In other words, the recognition level is set higher according to the number of times of making contact with the robot 1 by the object person T.

Returning to FIG. 2, the model information 62 will be described. The model information 62 is information about a model that determines a physical characteristic of the object person T on the basis of image data. For example, the model includes a model for estimating the age of the object person T and a model for determining whether or not the object person T walks with a stick or uses a wheelchair.

The physical characteristics table 63 is a table of the physical characteristics of the object person T. FIG. 4 is a diagram illustrating an example of the physical characteristics table 63 according to the embodiment. As illustrated in FIG. 4, the physical characteristics table 63 is a table that shows ranks in each of items of "age" and "the others" as the physical characteristics.

The physical characteristics are each ranked into three levels of A, B, and C, and each physical characteristic decreases in the order of A, B, and C. In the example of FIG. 4, a person who is under 8 years old is represented by "C", a person who is 8 to 15 years old or over 50 years old is represented by "B", and a person who is 15 to 50 years old is represented by "A".

In a case where the object person T is under 8 years old or over 50 years old, it is assumed that the object person T is difficult to see farther and difficult to understand the operation of the robot 1. Therefore, the physical characteristics of the object person T under 8 years old or over 50 years old is ranked lower than that of the object person T from 8 to 15 years old.

Furthermore, in "the others" of FIG. 4, the physical characteristic of the object person T who walks with the stick or the object person T who uses the wheelchair or a walking aid is ranked lower than that of a healthy person. Note that the physical characteristics table 63 illustrated in FIG. 4 is an example and is not limited thereto.

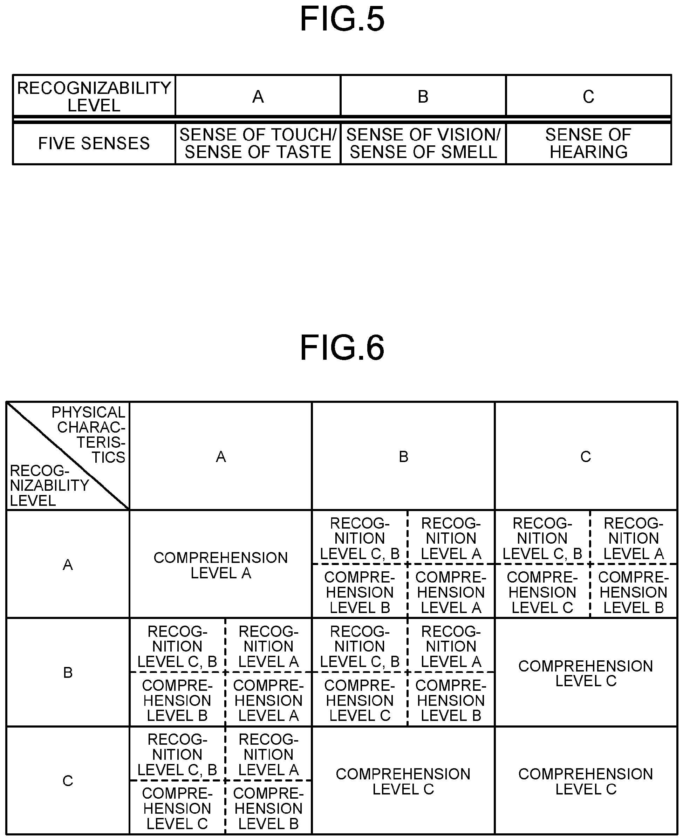

Returning to FIG. 2, the easiness level table 64 will be described. The easiness level table 64 is a table that shows easiness in recognition of a hazard factor of the robot 1 to the object person T, by the object person T. FIG. 5 is a diagram illustrating an example of the easiness level table 64 according to the embodiment.

As illustrated in FIG. 5, the easiness level table 64 is a table that shows relationships between recognizability levels and five senses. Here, the five senses represent which organ of the object person T is used to recognize the hazard factor of the robot 1.

For example, a recognizability level in recognition of the hazard factor of the robot 1 only by the sense of touch or the sense of taste is represented by "C", and the recognizability level in recognition of the hazard factor only by the sense of vision or the sense of smell is represented by "B". In addition, the recognizability level in recognition of the hazard factor by the sense of hearing is represented by "A".

For example, in a case where the hazard factor is heat generated by the robot 1, the object person T is only allowed to recognize the hazard factor by the sense of touch, and the recognizability level is represented by "C". In addition, in a case where the object person T can recognize the hazard factor by the sense of vision or the sense of smell, the recognition is facilitated, and the recognizability level is represented by "B". Furthermore, in a case where the hazard factor can be recognized by the sense of hearing, the hazard factor can be recognized from a farther distance, and thus, the easiness in recognition is set to "A".

Returning to FIG. 2, the comprehension level table 65 will be described. The comprehension level table 65 is a table of comprehension levels of the object person T to the robot. FIG. 6 is a diagram illustrating an example of the comprehension level table 65 according to the embodiment.

As illustrated in FIG. 6, the comprehension level table 65 is a table for calculating the comprehension level on the basis of the physical characteristic and the recognizability level. In the example of FIG. 4, when both the easiness in recognition and the recognition level are "A", the comprehension level is "A". Furthermore, when the easiness in recognition is "A" and the physical characteristic is "B", the comprehension level is decided according to the rank of the recognition level illustrated in FIG. 3.

Specifically, when the recognition level is C or B, the comprehension level is "B", and when the recognition level is "A", the comprehension level is "A". In addition, in the example illustrated in FIG. 6, the comprehension level lowers as the easiness in recognition is ranked lower, and the comprehension level lowers as the physical characteristic is ranked lower.

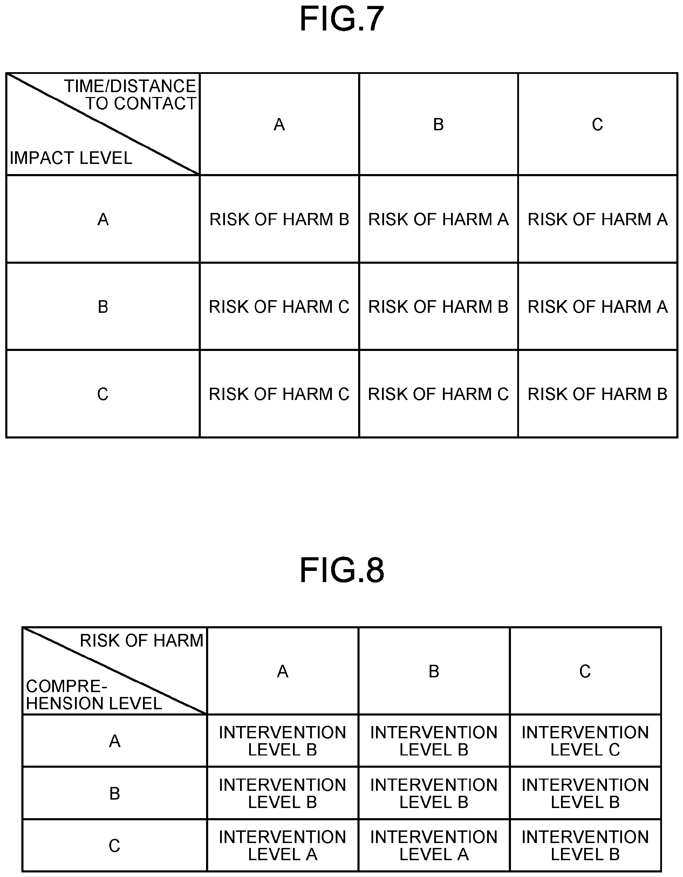

Returning to FIG. 2, the risk table 66 will be described. The risk table 66 is a table of the risk of harm that may be caused to the object person T by the robot 1. FIG. 7 is a diagram illustrating an example of the risk table 66 according to the embodiment. As illustrated in FIG. 7, the risk table 66 is a table for deciding the risk of harm, on the basis of an impact level and time/distance to contact.

Here, the impact level represents a magnitude of damage of the object person T when the robot 1 does harms to the object person T. For example, the impact level indicated when the object person T is seriously injured is "A", the impact level indicated when the object person T is slightly injured is "B", and the impact level indicated when the object person T is not harmed is "C".

Here, in a case where the impact level can be lowered in advance, the impact level having been lowered is applied. For example, in a case where the robot 1 is a twin bowl robot and one arm is broken and sharpened, if the broken arm is retracted and is switched to the other arm not broken, the impact level can be reduced.

In addition, the "time/distance to contact" illustrated in FIG. 7 represents time/distance before the robot 1 makes contact with the object person T. The time/distance to contact is calculated on the basis of the distance between the robot 1 and the object person T or speeds at which both of the robot 1 and the object person T move.

For example, when the distance between the robot 1 and the object person T is 3 m or less or a time to contact is 3 seconds or less, the time/distance to contact is "C", and when the distance between the robot 1 and the object person T is 5 m or less or the time to contact is 5 seconds or less, the time/distance to contact is "B". When the distance between the robot 1 and the object person T is 5 m or more or the time to contact is 5 seconds or more, the time/distance to contact is "A".

Then, in the example illustrated in FIG. 7, the higher the impact level, the higher the risk of harm, and the higher the time/distance to contact, the higher the risk of harm.

Returning to FIG. 2, the intervention level table 67 will be described. The intervention level table 67 is a table for calculating the intervention level on the basis of the risk of harm and the comprehension level. FIG. 8 is a diagram illustrating an example of the intervention level table 67 according to the embodiment.

As illustrated in FIG. 8, the intervention level table 67 is a table that shows a relationship between the risk of harm, the comprehension level, and the intervention level. In the example illustrated in FIG. 8, the higher the comprehension level, the lower the intervention level, and the higher the risk of harm, the higher the intervention level.

Returning to FIG. 2, the action table 68 will be described. The action table 68 is a table that defines the notification action according to the intervention level. Furthermore, in the present embodiment, the notification action according to the hazard factor is defined in the action table 68.

The control unit 7 has a function of controlling each configuration of the robot control device 10. In addition, as illustrated in FIG. 2, the control unit 7 includes an attribute determination unit 71, a state determination unit 72, a calculation unit 73, a decision unit 74, and a behavior detection unit 75.

The attribute determination unit 71 determines the attribute of the object person T. Specifically, for example, the attribute determination unit 71 extracts the feature amount of the object person T from image data captured by the RGB camera 32, and compares the feature amount of the object person T with the feature amount of the object person information 61 to determine whether or not the object person T is a person registered in the object person information 61.

Then, when the object person T is registered in the object person information 61, the attribute determination unit 71 extracts the recognition level of this object person T, and when the object person T is not registered in the object person information 61, the attribute determination unit 71 newly registers the object person in the object person information 61.

Furthermore, when the robot 1 moves along a scheduled travel route, the attribute determination unit 71 selects an object person T who is likely to collide with the robot 1, and determines the physical characteristics of this object person T from the image data of the object person T. Specifically, as described above, the attribute determination unit 71 determines the age of the object person T, the presence or absence of the stick, wheelchair, walking aid, and the like, on the basis of the model information 62.

Then, the attribute determination unit 71 decides the ranks of the physical characteristics for the object person T, on the basis of the physical characteristics table 63. In addition, the attribute determination unit 71 refers to the comprehension level table 65, on the basis of the recognizability level notified of by the state determination unit 72, which is described later, and decides the rank of the comprehension level of the object person T to the robot 1. In other words, the attribute determination unit 71 decides the comprehension level depending on whether the hazard factor of the robot 1 is recognized by which organ.

The state determination unit 72 determines a state of the robot 1. Specifically, the state determination unit 72 determines the state of the robot 1, for example, by using image data obtained by imaging the robot 1, a temperature sensor provided in the robot 1, and the like.

For example, the state determination unit 72 determines the presence or absence of a failure of the robot 1, the presence or absence of a carried object, the content of the carried object, and the like on the basis of the image data, and determines the surface temperature and the like of the robot 1 by using the temperature sensor.

Then, the state determination unit 72 decides the current "impact level" (see FIG. 7) of the robot 1 according to the determined state. Furthermore, the decision unit 74 is notified of information about the content of the carried object that has been determined by the state determination unit 72.

The calculation unit 73 calculates the intervention level at which the robot 1 should intervene in the object person T, on the basis of the attribute of the object person T determined by the attribute determination unit 71 and the risk of spirit that may be caused to the object person T by the robot 1.

Specifically, for example, when the robot 1 moves along the current scheduled travel route, the calculation unit 73 selects the object person T who may make contact with the robot 1. Next, the calculation unit 73 calculates the distance to the object person T on the basis of the measurement results of the laser distance measurement device 31 and the stereo camera 33.

Furthermore, the calculation unit 73 is configured to track the object person T to calculate a moving speed and a moving direction of the object person T, and calculate the current speed and direction of the robot 1 on the basis of a detection result of the inertial measurement unit 34.

Then, the calculation unit 73 calculates the time/distance to contact described above, on the basis of the distance and the speeds, and decides the rank of the time/distance to contact. Thereafter, the calculation unit 73 refers to the risk table 66, on the basis of the decided "time/distance to contact" and the "impact level" decided by the state determination unit 72, and calculates the risk of harm.

Here, as described above, the less the time/distance to contact, the higher the risk of harm. In other words, as the distance between the robot 1 and the object person T decreases, the risk of harm increases. Therefore, the calculation unit 73 calculates the time/distance to contact as needed and updates the risk of harm. Therefore, it is possible to provide an appropriate notification according to the risk of harm.

The decision unit 74 decides the notification action of notifying, by the robot 1, the object person T of the presence of the robot 1, on the basis of the attribute determined by the attribute determination unit 71 and the risk of harm that may be caused to the object person T by the robot 1.

Specifically, the decision unit 74 decides the notification action on the basis of the intervention level calculated by the calculation unit 73. In the present embodiment, the decision unit 74 selects a notification method for the notification action according to the intervention level. Here, as described below, the notification method includes a direct notification method and an indirect notification method.

For example, in a case where the intervention level is "A", the decision unit 74 selects the direct notification method and decides the notification action causing the object person T to reliably notice the presence of the robot 1.

Specifically, a warning image is displayed on the output unit 4 or warning sound is output from the output unit 4 to make a direct appeal of the presence of the robot 1 to the object person T. Note that in this configuration, for example, a light emitter such as a light may be caused to blink to make an appeal of the presence of the robot 1 to the object person T.

Furthermore, in a case where the object person T is to touch the robot 1 having an arm being broken or heated, the decision unit 74 may perform an action of urging the object person T to hold a portion (e.g., the trunk) other than the arm.

Furthermore, in a case where the intervention level is "B", that is, in a case where the intervention level is within a predetermined range, the decision unit 74 decides the notification action indirectly notifying of the hazard factor of the robot 1. For example, the decision unit 74 decides, as the notification action, an action suggesting the content of the carried object carried by the robot 1.

When the robot 1 is carrying the carried object of heavy weight, it can be considered that the robot 1 may make contact with the object person T and drop the carried object on the object person T. Therefore, the decision unit 74 decides, as the notification action, an action suggesting that the carried object of heavy weight is being carried.

Specifically, the decision unit 74 decides, as the notification action, an action showing the wobbling of the robot 1 due to the weight of the carried object. In addition, when the robot 1 is carrying a container containing liquid, the decision unit 74 decides, as the notification action, an action of putting an arm different from an arm holding the container on the container. Accordingly, it is possible to suggest that the carried object is the liquid.

Furthermore, in a case where the arm is broken and there is a risk that the object person T may be injured when the arm touches the object person T, an action of swinging the arm is decided as the notification action according to the shake when the robot 1 moves. Therefore, the object person T can be indirectly notified of the damage of the arm. When the intervention level is "C", the notification action is not performed.

The decision unit 74 causes the output unit 4 to display the warning image thereon or causes the drive unit 5 to drive according to the decided notification action, and thus, it is possible to cause the robot 1 to perform the notification action.

Then, the decision unit 74 decides a next notification action subsequent to the notification action, on the basis of a behavior of the object person T detected by the behavior detection unit 75 which is described later. Specifically, when the object person T takes on behavior of showing an understanding of the notification action, the decision unit 74 stops the notification action and returns to performance of an original task.

Note that, in this configuration, the decision unit 74 may perform the original task while continuing the notification action with the intervention level fixed.

Meanwhile, when the object person T does not understand the notification action, the decision unit 74 continues to perform the notification action according to the current intervention level. Here, as described above, the intervention level is updated according to the distance between the robot 1 and the object person T. Therefore, as the distance between the robot 1 and the object person T decreases, the intervention level increases, performing the notification action according to a change in the intervention level.

Furthermore, as described above, in a case where the arm is broken or being heated, the decision unit 74 allows an action such as retracting the broken arm, when the impact level can be lowered by an alternative means.

The behavior detection unit 75 detects the behavior of the object person T. The behavior detection unit 75 analyzes the image data captured by the RGB camera 32 to detect the behavior of the object person T.

In the present embodiment, the behavior detection unit 75 detects, as the behavior of the object person T, a behavior related to whether or not the object person T understands the notification action of the robot 1. Specifically, for example, the behavior detection unit 75 detects the behavior such as whether or not the object person T looks at the notification action of the robot 1 or whether the moving speed of the object person T changes before and after the notification action.

In other words, the robot control device 10 pays attention to the point that the object person T shows different behaviors between when understanding the notification action and when not understanding the notification action, and decides the next action after the notification action.

Therefore, there is no need to perform an excessive notification action, and thus, it is possible to appropriately inform the object person T of the presence of the robot 1.

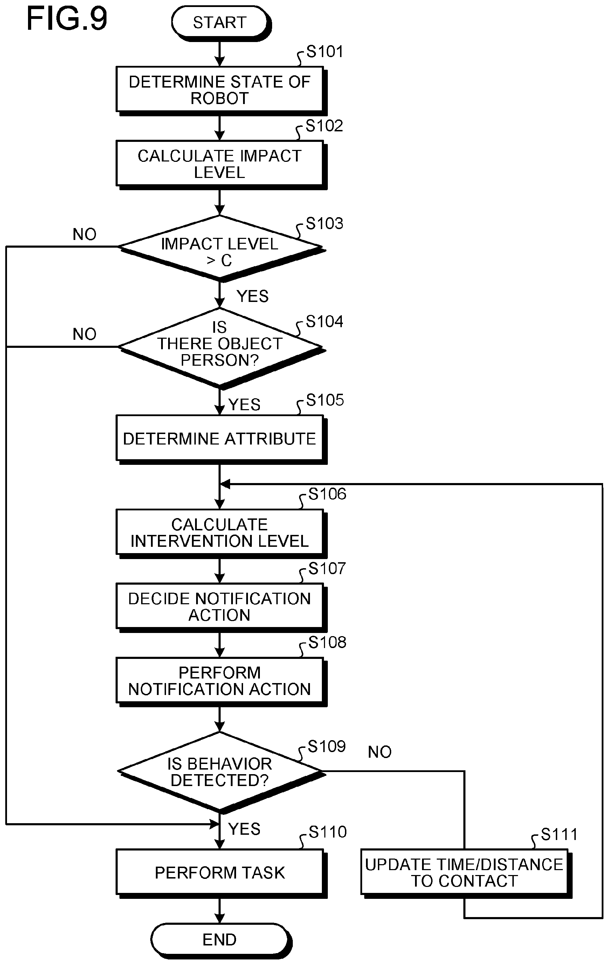

Next, a processing procedure performed by the robot control device 10 according to the embodiment will be described with reference to FIG. 9. FIG. 9 is a flowchart illustrating a processing procedure performed by the robot control device 10.

As illustrated in FIG. 9, the robot control device 10 determines the state of the robot 1 first (Step S101), and calculates the impact level on the basis of the hazard factor (Step S102). Subsequently, the robot control device 10 determines whether or not the impact level calculated in Step S102 is higher than "C" (Step S103), and when the impact level is higher than "C" (Step S103, Yes), the robot control device 10 determines whether or not there is the object person T who may make contact with the robot 1 (Step S104).

When the object person T is found in the determination in Step S104 (Step S104, Yes), the robot control device 10 determines the attribute of the object person T (Step S105) and calculates the intervention level (Step S106) .

Then, the robot control device 10 decides the notification action on the basis of the intervention level (Step S107), and causes the robot 1 to perform the decided notification action (Step S108).

Subsequently, the robot control device 10 determines whether or not the behavior of the object person T who recognizes the robot 1 is detected (Step S109), and when such a behavior is detected (Step S110), the original task is performed (Step S110), and the processing is finished.

On the other hand, when the behavior is not detected in the determination in Step S109 (Step S109, No), the robot control device 10 updates the time/distance to contact (Step S111), and proceeds to Step S106.

Furthermore, when the impact level is "C" in the determination in Step S103 (Step S103, No), or when there is no object person in the determination processing in Step S104 (Step S104, No), the robot control device 10 proceeds to Step S110.

Furthermore, in each process described in the embodiments described above, all or part of the processes described to be automatically performed can also be performed manually, or all or part of the processes described to be performed manually can also be performed automatically by a known method. In addition, the processing procedure, specific names, and information including various data and parameters, which are shown in the above description or the drawings can be appropriately changed unless otherwise specified. For example, various information illustrated in the drawings is not limited to the information illustrated.

Furthermore, the component elements of the devices are illustrated as functional concepts and are not necessarily required to be physically configured as illustrated. In other words, the specific forms of distribution or integration of the devices are not limited to those illustrated, and all or part thereof can be configured by being functionally or physically distributed or integrated, in any units, according to various loads or usage conditions.

Furthermore, the embodiments and modifications described above can be appropriately combined within a range consistent with the contents of the processing.

Furthermore, the effects described herein are merely examples, and the present disclosure is not limited to the effects and may have other effects.

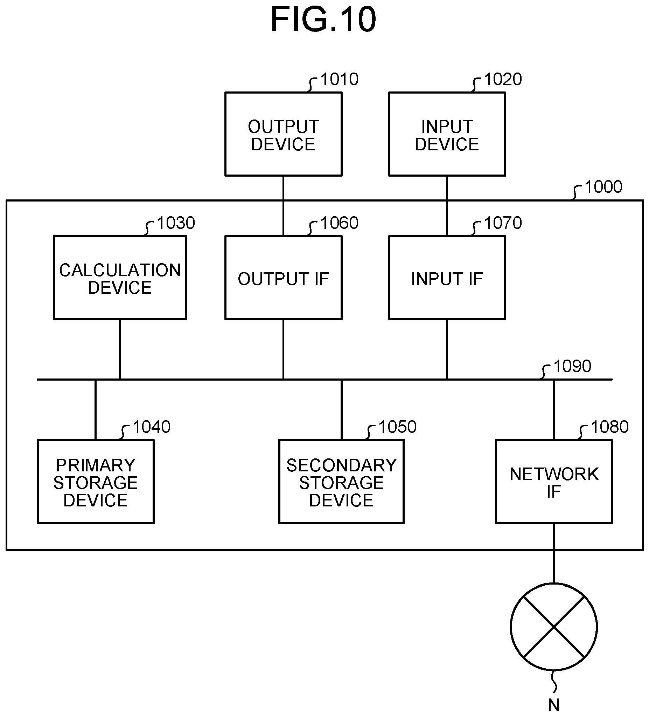

An information device such as the robot control device according to the embodiments described above, an HMD, and a controller is implemented, for example, by a computer 1000 as illustrated in FIG. 10. Hereinafter, the robot control device 10 according to the embodiment will be described as an example. FIG. 10 is a hardware configuration diagram illustrating an example of a computer 1000 implementing the function of the robot control device 10. The computer 1000 includes a CPU 1100, a RAM 1200, a read only memory (ROM) 1300, a hard disk drive (HDD) 1400, a communication interface 1500, and an input/output interface 1600. The component units of the computer 1000 are connected by a bus 1050.

The CPU 1100 is operated on the basis of a program stored in the ROM 1300 or the HDD 1400 and controls each unit. For example, the CPU 1100 deploys programs stored in the ROM 1300 or the HDD 1400 to the RAM 1200 and executes processing corresponding to various programs.

The ROM 1300 stores a boot program such as a basic input output system (BIOS) executed by the CPU 1100 when the computer 1000 is booted, a program depending on hardware of the computer 1000, and the like.

The HDD 1400 is a computer-readable recording medium that non-transitorily records programs executed by the CPU 1100, data used by the programs, and the like. Specifically, the HDD 1400 is a recording medium that records a program according to the present disclosure as an example of program data 1450.

The communication interface 1500 is an interface that connects the computer 1000 to an external network 1550 (e.g., the Internet). For example, the CPU 1100 receives data from another device or transmits data generated by the CPU 1100 to the other device via the communication interface 1500.

The input/output interface 1600 is an interface for connecting an input/output device 1650 and the computer 1000. For example, the CPU 1100 receives data from an input device such as a keyboard or mouse via the input/output interface 1600. In addition, the CPU 1100 transmits data to an output device such as a display, speaker, or printer via the input/output interface 1600. Furthermore, the input/output interface 1600 may function as a media interface that reads a program or the like recorded on a predetermined recording medium. The medium includes, for example, an optical recording medium such as a digital versatile disc (DVD) and phase change rewritable disk (PD), a magneto-optical recording medium such as a magneto-optical disk (MO), a tape medium, a magnetic recording medium, a semiconductor memory, and the like.

For example, when the computer 1000 functions as the robot control device 10 according to the embodiment, the CPU 1100 of the computer 1000 implements the functions of the attribute determination unit 71 and the like by executing the programs loaded on the RAM 1200. Furthermore, the HDD 1400 stores the program according to the present disclosure and data stored in the storage unit 6. Note that the CPU 1100 executes the program data 1450 read from the HDD 1400, but in another example, the CPU 1100 may acquire programs from other devices via the external network 1550.

Note that the present technology can also employ the following configurations.
(1). A robot control device comprising:
   an attribute determination unit that determines an attribute of an object person around a robot; and
   a decision unit that decides a notification action of notifying, by the robot, the object person of presence of the robot, based on the attribute determined by the attribute determination unit and a risk of harm that may be caused to the object person by the robot.
(2). The robot control device according to (1), further comprising
   a calculation unit that calculates an intervention level at which the robot should intervene in the object person, based on the attribute and the risk of harm,
   wherein the decision unit
   decides the notification action based on the intervention level calculated by the calculation unit.
(3). The robot control device according to (2), wherein the decision unit
   changes a notification method for the notification action based on the intervention level.
(4). The robot control device according to any one of (1) to (3), wherein
   the attribute determination unit
   determines the attribute based on a comprehension level of the object person to the robot.
(5). The robot control device according to any one of (1) to (3), wherein
   the attribute determination unit
   determines the attribute based on a physical feature of the object person.
(6). The robot control device according to any one of (2) to (5), wherein
   the calculation unit
   calculates the intervention level that is higher as the risk of harm is higher.
(7). The robot control device according to any one of (2) to (6), wherein
   the calculation unit
   calculates the risk of harm based on a distance between the robot and the object person.
(8). The robot control device according to any one of (2) to (7), wherein
   the calculation unit
   calculates the risk of harm based on a speed at which the object person approaches the robot.
(9). The robot control device according to any one of (2) to (8), further comprising
   a state determination unit that determines a hazard factor being a potential harm to the object person, based on a state of the robot,
   wherein the calculation unit
   calculates the risk of harm based on the hazard factor determined by the state determination unit.
(10). The robot control device according to (9), wherein
   the state determination unit
   determines the hazard factor based on a surface temperature of the robot.
(11). The robot control device according to (9) or (10), wherein
   the state determination unit
   determines the hazard factor based on presence or absence of the robot.
(12). The robot control device according to any one of (9) to (11), wherein
   the state determination unit
   determines the hazard factor based on a carried object being carried by the robot.
(13). The robot control device according to (12), wherein
   the decision unit
   decides an action suggesting the carried object, as the notification action.
(14). The robot control device according to any one of (9) to (13), wherein
   the decision unit
   decides the notification action, based on a recognizability level at which the object person recognizes the hazard factor.
(15). The robot control device according to any one of (9) to (14), wherein
   the decision unit
   determines whether or not to perform a next notification action, based on a behavior of the object person after the notification action.
(16). The robot control device according to (15), wherein
   the decision unit
   in a case where the intervention level is within a predetermined range, decides an operation action suggesting the hazard factor, as the notification action.
(17). The robot control device according to any one of (1) to (16), wherein
   the decision unit
   when the intervention level is beyond the predetermined range, decides an output of at least one of an image or voice as the notification action.
(18). A method, by a computer, comprising:
   determining an attribute of an object person around a robot; and
   deciding a notification action of notifying, by the robot, the object person of presence of the robot, based on the determined attribute and a risk of harm that may be caused to the object person by the robot.
(19). A program causing
   a computer to function as:
   an attribute determination unit that determines an attribute of an object person around a robot; and
   a decision unit that decides a notification action of notifying, by the robot, the object person of presence of the robot, based on the attribute determined by the attribute determination unit and a risk of harm that may be caused to the object person by the robot.

### Reference Signs List

- 1: ROBOT
- 10: ROBOT CONTROL DEVICE
- 71: ATTRIBUTE DETERMINATION UNIT
- 72: STATE DETERMINATION UNIT
- 73: CALCULATION UNIT
- 74: DECISION UNIT
- 75: BEHAVIOR DETECTION UNIT

## Claims

1. A robot control device comprising:
an attribute determination unit that determines an attribute of an object person around a robot; and
a decision unit that decides a notification action of notifying, by the robot, the object person of presence of the robot, based on the attribute determined by the attribute determination unit and a risk of harm that may be caused to the object person by the robot.

2. The robot control device according to claim 1, further comprising
a calculation unit that calculates an intervention level at which the robot should intervene in the object person, based on the attribute and the risk of harm,
wherein the decision unit
decides the notification action based on the intervention level calculated by the calculation unit.

3. The robot control device according to claim 2, wherein
the decision unit
changes a notification method for the notification action based on the intervention level.

4. The robot control device according to claim 1, wherein
the attribute determination unit
determines the attribute based on a comprehension level of the object person to the robot.

5. The robot control device according to claim 1, wherein
the attribute determination unit
determines the attribute based on a physical feature of the object person.

6. The robot control device according to claim 2, wherein
the calculation unit
calculates the intervention level that is higher as the risk of harm is higher.

7. The robot control device according to claim 2, wherein
the calculation unit
calculates the risk of harm based on a distance between the robot and the object person.

8. The robot control device according to claim 2, wherein
the calculation unit
calculates the risk of harm based on a speed at which the object person approaches the robot.

9. The robot control device according to claim 2, further comprising
a state determination unit that determines a hazard factor being a potential harm to the object person, based on a state of the robot,
wherein the calculation unit
calculates the risk of harm based on the hazard factor determined by the state determination unit.

10. The robot control device according to claim 9, wherein
the state determination unit
determines the hazard factor based on a surface temperature of the robot.

11. The robot control device according to claim 9, wherein
the state determination unit
determines the hazard factor based on presence or absence of the robot.

12. The robot control device according to claim 9, wherein
the state determination unit
determines the hazard factor based on a carried object being carried by the robot.

13. The robot control device according to claim 12, wherein
the decision unit
decides an action suggesting the carried object, as the notification action.

14. The robot control device according to claim 9, wherein
the decision unit
decides the notification action, based on a recognizability level at which the object person recognizes the hazard factor.

15. The robot control device according to claim 1, wherein
the decision unit
determines whether or not to perform a next notification action, based on a behavior of the object person after the notification action.

16. The robot control device according to claim 9, wherein
the decision unit
in a case where the intervention level is within a predetermined range, decides an operation action suggesting the hazard factor, as the notification action.

17. The robot control device according to claim 16, wherein
the decision unit
when the intervention level is beyond the predetermined range, decides an output of at least one of an image or voice as the notification action.

18. A method, by a computer, comprising:
determining an attribute of an object person around a robot; and
deciding a notification action of notifying, by the robot, the object person of presence of the robot, based on the determined attribute and a risk of harm that may be caused to the object person by the robot.

19. A program causing
a computer to function as:
an attribute determination unit that determines an attribute of an object person around a robot; and
a decision unit that decides a notification action of notifying, by the robot, the object person of presence of the robot, based on the attribute determined by the attribute determination unit and a risk of harm that may be caused to the object person by the robot.
